(19) Europäisches Patentamt
European Patent Office
Office européen des brevets

(11) **EP 1 756 819 B1**

(12) **EUROPEAN PATENT SPECIFICATION**

(45) Date of publication and mention
of the grant of the patent:
**22.04.2009 Bulletin 2009/17**

(51) Int Cl.:
***G11B 7/26*** (2006.01)

(21) Application number: **05750788.1**

(22) Date of filing: **17.06.2005**

(86) International application number:
**PCT/KR2005/001885**

(87) International publication number:
**WO 2005/124757 (29.12.2005 Gazette 2005/52)**

(54) **APPARATUS FOR ATTACHING AND DETACHING CAP FOR OPTICAL DISC SPIN-COATING, APPARATUS FOR OPTICAL DISC SPIN-COATING COMPRISING THE SAME, METHOD OF MANUFACTURING OPTICAL DISC USING THE APPARATUS FOR ATTACHING AND DETACHING CAP FOR OPTICAL DISC SPIN-COATING**

VORRICHTUNG ZUM ANBRINGEN UND ABLÖSEN EINER KAPPE FÜR EINE AUFSCHLEUDERBESCHICHTUNG EINES OPTISCHEN DATENTRÄGERS, VORRICHTUNG FÜR DIE AUFSCHLEUDERBESCHICHTUNG EINES OPTISCHEN DATENTRÄGERS DAMIT, VERFAHREN ZUR HERSTELLUNG EINES OPTISCHEN DATENTRÄGERS UNTER VERWENDUNG DER VORRICHTUNG ZUM ANBRINGEN UND ABLÖSEN EINER KAPPE FÜR DIE AUFSCHLEUDERBESCHICHTUNG EINES OPTISCHEN DATENTRÄGERS

DISPOSITIF PERMETTANT LA FIXATION ET LA SEPARATION DU CHAPEAU SUR UN APPAREIL DE REVETEMENT PAR CENTRIFUGATION POUR DISQUES OPTIQUES, APPAREIL DE REVETEMENT PAR CENTRIFUGATION DE DISQUES OPTIQUES COMPRENANT CE DISPOSITIF, PROCEDE DE PRODUCTION DE DISQUES OPTIQUES FAISANT APPEL A CE DISPOSITIF DE FIX

(84) Designated Contracting States:
**AT BE BG CH CY CZ DE DK EE ES FI FR GB GR HU IE IS IT LI LT LU MC NL PL PT RO SE SI SK TR**

(30) Priority: **18.06.2004 KR 2004045473**

(43) Date of publication of application:
**28.02.2007 Bulletin 2007/09**

(73) Proprietor: **LG Chem. Ltd.**
**Yeondeungpo-gu,**
**Seoul 150-721 (KR)**

(72) Inventors:
• **KANG, Tae-Sik**
**Patent Management Team**
**104-1 Munji-dong, Yuseong-gu**
**Daejeon-city 305-380 (KR)**
• **HAN, Mi-Young**
**Yuseong-gu,**
**Daejeon-city 305-720 (KR)**

• **LEE, Seongkeun,**
**Patent Management Team**
**Daejeon-city 305-380 (KR)**
• **JANG, Sung-Hoon**
**Daejeon-city 302-280 (KR)**
• **SEO, Hun,**
**403-701 Sambu Apt.**
**Seongnam-city,**
**Kyungki-do 463-749 (KR)**
• **LEE, Kwang-Lyul**
**Seoul 135-888 (KR)**
• **HONG, Youngjun**
**Patent Management Team**
**Daejeon-city 305-380 (KR)**

(74) Representative: **HOFFMANN EITLE**
**Patent- und Rechtsanwälte**
**Arabellastrasse 4**
**81925 München (DE)**

(56) References cited:
**JP-A- 10 289 489        JP-A- 11 213 459**
**JP-A- 2004 164 802**

## Description

## Technical Field

The present invention relates to an apparatus for optical disc spin-coating, and more particularly, to an apparatus for optical disc spin-coating that can easily attach and detach a cap for covering a central hole of an optical disc by including a permanent magnet even when contaminated by a photocurable resin, an apparatus for optical disc spin-coating comprising the same, and a method of manufacturing an optical disc using the apparatus for attaching and detaching a cap for optical disc spin-coating.

## Background Art

Optical discs are used in optical pickup apparatuses for recording/reproducing information. Examples of optical disc include compact discs (CDs) with a storage capacity of 600 to 800 MB and digital versatile discs (DVDs) with a storage capacity of 4 to 10 GB. Recently, to store more data and achieve higher audio and video quality, blu-ray discs (BDs) or HD-DVDs with a storage capacity of 20 GB or greater have been developed using a 405 nm blue laser technology.

To increase recording density of optical discs, various methods are used. One possibility in this regard is to minimize the size of a light spot, which is achieved by controlling the wavelength of a laser and the number of apertures of a lens according to the following equations:

$$D \propto 1.22\, \lambda\, /NA \;\ldots(1)$$

$$F \propto \lambda\, /NA^{2} \;\ldots(2)$$

$$f \propto A/2NA \;\ldots(3)$$

where D is the diameter of a spot, $\lambda$ is the wavelength of a laser, NA is the number of apertures of a lens, F is a focal depth, f is a focal distance, and A is the diameter of a lens.

As shown in equation 1, when the wavelength of a laser decreases and the number of the apertures of a lens increases, the size of the spot decreases, the pit of a disc and the size of a corresponding track decreases, and the record density increases inverse-proportionally to the square of the size of the spot. On the other hand, as shown in the equations 2 and 3, when the wavelength decreases and the number of the apertures increases, the focal depth decreases and the focal distance decreases.

That is, the BD has a light spot of a smaller diameter, smaller focal depth, and smaller focal distance than the DVD, which has a light spot of smaller diameter, smaller focal depth, and smaller focal distance than the CD. As the focal depth and the focal distance decreases, the reproducing characteristics become more dependent on the state of the light incidence surface of the optical disc. Accordingly, the incidence surface must be protected from scratches and variance of the thickness of the optical disc must be very small.

Meanwhile, in a method of manufacturing an optical disc, a light-transmitting layer, a protecting layer, a lacquer layer, and the like are formed by spin-coating. The use of spin-coating brings about many advantages. For example, a resin that is removed after the spin-coating can be re-circulated in the apparatus, and by controlling the time for the spin-coating and the viscosity of the resin the light-transmitting layer and the like can have various thicknesses.

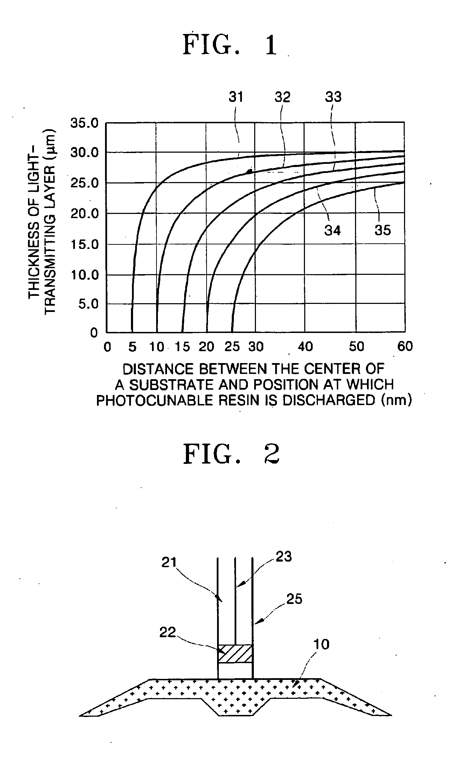

FIG. 1 is a graph illustrating the thickness of the light-transmitting layer with respect to the distance between the center of a substrate and a position at which a photocurable resin is discharged onto the substrate. Referring to FIG. 1, the distance varies from 5 to 25 mm and is increased by 5 mm. Numeral '31' denotes the case where the distance is 5 mm, numeral '32' denotes the case where the distance is 10 mm, numeral '33' denotes the case where the distance is 15 mm, numeral '34' denotes the case where the distance is 20 mm, and numeral '35' denotes the case where the distance is 25 mm. As illustrated in FIG. 1, as the position at which a photocurable resin is discharged onto the substrate is closer to the inner circumference of the substrate, the variance of the thickness of the light-transmitting layer decreases. When the discharge position corresponds to the center of the substrate, theoretically, a light-transmitting layer with no thickness variance can be obtained.

In a method of manufacturing a CD, a recording layer and a reflecting layer are formed on a polycarbonate substrate with a thickness of 1.2 mm by sputtering, and then a thin lacquer layer is formed thereon by spin-coating to protect the recording layer, reflecting layer, and the like because the focal distance of a laser is too long. Since the thickness of the lacquer layer is as small as 3 to 5 $\mu$m, even when a thickness variance occurs, the variance is very low. In addition, a recording or reproducing light enters from the lower portion of the polycarbonate substrate so that even when the thickness of the upper most layer, that is, the lacquer layer, varies, no errors occur during data reproducing. Accordingly, there is no need to discharge the photocurable resin at the center of the optical disc when the lacquer layer is formed by spin-coating.

However, in a method of manufacturing a BD with higher integration capacity using a blue laser, since the focal distance is very short while the integrity of data increases, a reflecting layer, a recording layer, and the like are formed on a 1.1 mm thick polycarbonate and then a 0.1 mm thick light-transmitting layer, through which a reproducing light enters, is formed thereon. Accordingly, the reproduction characteristics of the BD are very dependent on the state of the surface and thickness variance of the photo-transmitting layer.

The light-transmitting layer can be formed by attaching a 0.1 mm thick light-transmitting sheet made of polycarbonate using a reduced pressure adhesive or an ultraviolet curable adhesive. In this case, however, a disc is attached to a large sheet and the remaining part is removed, so that the much of the sheet is wasted, the manufacturing costs are increased, and the environment load is increased. Due to these problems, the spin-coating is mainly used for the formation of the light-transmitting layer.

As described with reference to FIG. 1, when the spin-coating is performed by discharging the photocurable resin circularly at a predetermined position departing from the center of the optical disc, the thickness of the resin layer increases from the center of the optical disc to the outside. When such an increase of the thickness occurs in the BD, data reproducing errors can occur. In order to prevent this problem, the photocurable resin must be discharged at the center of the rotating disc. However, since a conventional optical disc has a hole at its center, another problem occurs, i.e., the photocurable resin can leak into the hole. As a result, many techniques have been developed to prevent the leakage of the photocurable resin into the hole.

For example, according to Japanese Patent Laid-open Publication No. 1998-289489, a center hole of an optical disc is covered by a cap, and then the cap is detached using an electromagnet when spin-coating is completed. In this case, however, the cap is persistently attached to an electromagnet because the electromagnet is contaminated by a resin doped on the surface of the cap, when the power source is turned off.

According to US Patent No. 6689415, a cap is attached to or detached from the optical disc using a holding axis formed at its center to cover a center hole of an optical disc. However, the use of the holding axis is much inefficient compared to the use of the electromagnet for attaching and detaching operations. In addition, a photocurable resin cannot be doped at the center of the optical disc because of the holding axis formed at the center of the cap, so that thickness variance can occur in a coated layer. Document JP 11 213 459 A discloses a manufacturing device and manufacturing method of an optical recording medium capable of forming a light transmission film by an uniform film thickness in a disk substrate.

## Disclosure of Invention

### Technical Problem

The present invention provides an apparatus for attaching and detaching a cap for optical disc spin-coating that prevents the contamination due to a resin and can easily attach and detach the cap, thus increasing manufacturing efficiency.

The present invention also provides an apparatus for optical disc spin-coating comprising the apparatus for attaching and detaching a cap for optical disc spin-coating.

The present invention also provides a method of manufacturing an optical disc using the apparatus for attaching and detaching a cap for optical disc spin-coating.

## Technical Solution

According to an aspect of the present invention, there is provided an apparatus for attaching and detaching a cap for optical disc spin coating which is attached to and detached from the center hole of the optical disc, including: a guide member that can approach and recede from an upper portion of the cap; and a permanent magnet member that is coupled to the guide member such that the permanent magnet member can slide from a position where the guide member can be magnetically bonded to the cap to a position where the guide member can be magnetically separated from the cap.

The guide member may be conduit-shaped and forms a space for moving where the permanent magnet member slides.

The permanent magnet member may include a piston head - shaped permanent magnet, and a shaft-shaped holding member that has an end bonded to the permanent magnet and the other end bonded to the outside the guide member.

According to another aspect of the present invention, there is provided an apparatus for optical disc spin-coating, including a rotary turntable on which an optical disc is placed; a cap for covering a center hole of the optical disc; and the apparatus for attaching and detaching the cap for optical disc spin-coating.

According to yet another aspect of the present invention, there is provided a method of manufacturing an optical disc including: covering a center hole of the optical disc using a cap; discharging a photocurable resin onto a center of the cap; and spreading the photocurable resin on the entire surface of the optical disc by rotating the optical disc to form a protective layer, the method including attaching or detaching the cap using the apparatus.

## Description of Drawings

The above and other features and advantages of the present invention will become more apparent by describing in detail exemplary embodiments thereof with reference to the attached drawings in which:

FIG. 1 is a graph illustrating the thickness of a light-transmitting layer with respect to the distance between the center of a substrate and a position at which a photocurable resin is discharged ;

FIG. 2 is a schematic view of an apparatus for attaching and detaching a cap for optical disc spin-coating according to an embodiment of the present invention;

FIG. 3 illustrates exemplary shapes of an end of a guide member according to an embodiment of the present invention;

FIG. 4 illustrates a method of mounting a cap onto a center hole of an optical disc substrate according to an embodiment of the present invention;

FIG. 5 illustrates a method of removing an electromagnetic bond by lifting a permanent magnet member after the cap is covered onto the center hole of the optical disc substrate according to an embodiment of the present invention;

FIG. 6 illustrates a method of separating a guide member from an upper portion of the cap according to an embodiment of the present invention;

FIG. 7 illustrates a method of spin coating a photocurable resin after the cap is attached according to an embodiment of the present invention; and

FIG. 8 illustrates a method of attaching a cap using an electromagnet according to Comparative Example.

**Best Mode**

The present invention will now be described more fully with reference to the accompanying drawings.

An apparatus according to the present invention for attaching and detaching a cap for optical disc spin-coating which is attached to and detached from the center hole of the optical disc includes: a guide member that can approach and recede from an upper portion of the cap; and a permanent magnet member that is coupled to the guide member such that the permanent magnet member can slide from a position where the guide member can be magnetically bonded to the cap to a position where the guide member can be magnetically separated from the cap.

FIG. 2 is a schematic view of an apparatus for attaching and detaching a cap for optical disc spin-coating according to an embodiment of the present invention. The permanent magnetic member 21 includes a piston head - shaped permanent magnet 22, and a shaft-shaped holding member 23 that is bonded to the permanent magnet 22. However, the shape of the permanent magnetic member 21 is not limited thereto, and any modification known to those skilled in the art can be made on the permanent magnetic member 21. For example, the permanent magnetic 22 and the holding member 23 may form a cylindrical structure formed of a permanent magnet. Meanwhile, an end of the holding element 23 is connected to the outside of a guide member 25, for example, the axis of a rotary motor and cam, so that the holding element 23 can slide upward and downward in the guide member 25.

The guide member 25 that is conduit-shaped has a space for moving therein. The guide member 25 may have a cross section of a polygon structure, such as triangle, quadrangle, pentagon, and the like, or a circle. However, the shape of the guide member 25 is not limited thereto.

When the cap 10 is attached using the apparatus for attaching and detaching a cap for optical disc spin-coating, first the guide member 25 is placed on an upper portion of the cap 10, and then the permanent magnet member 21 inside the guide element 25 slides downward so that a lower surface of the permanent magnetic member 21 is magnetically bonded to an upper surface of the cap 10. The magnetic bonding does not indicate that the permanent magnet member 21 must physically contact the cap 10. That is, although the permanent magnet member 21 does not physically contact the cap 10, the cap 10 can be attached to the permanent magnet member 21 by a magnetic force. The cap 10 is mounted onto a center hole of an optical disc substrate by moving the apparatus of attaching and detaching a cap for optical disc spin-coating that is magnetically bonded to the cap 10. Thereafter, the permanent magnetic member 21 inside the guide member 25 slides upward to a position where the magnetic bonding is removed, so that the cap 10 is detached.

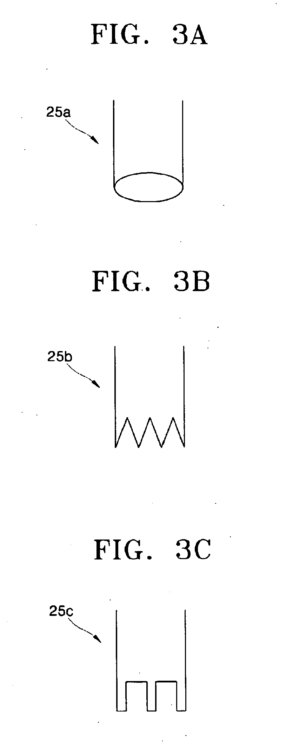

The end of the guide member 25 may have a shape formed such that the contact surface between the upper surface of the cap 10 and the guide member 20 is minimized, as shown in FIG. 3. However, the shape of the end of the guide member 25 is not limited thereto.

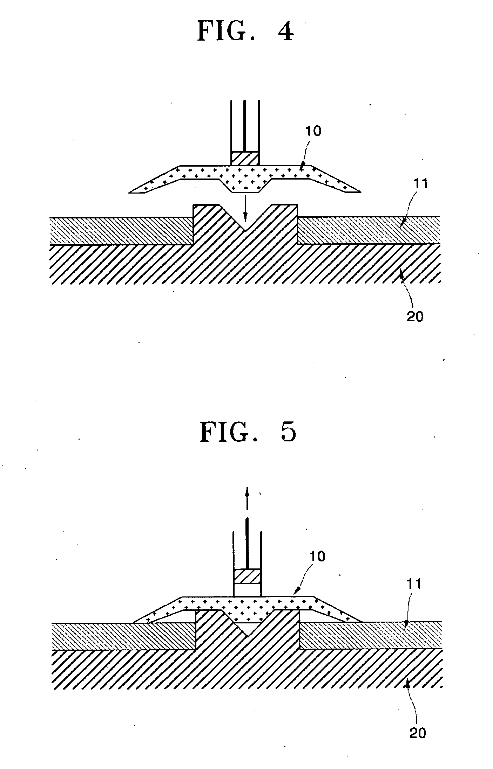

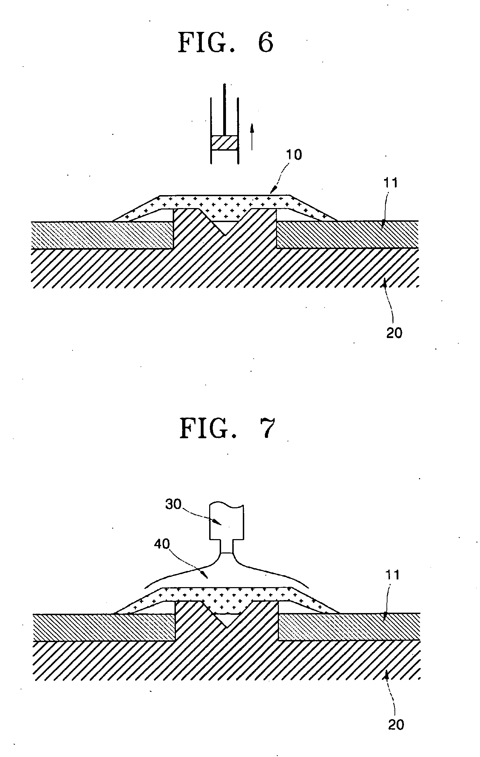

FIG. 4 illustrates a method of mounting the cap 10 onto a center hole of an optical disc substrate 11 according to an embodiment of the present invention. The optical disc substrate 11 is placed on the turntable 20, and then the cap 10 is mounted onto the center hole of the optical disc substrate 11 using the apparatus for attaching and detaching a cap, thus covering the center hole of the optical disc substrate 11. In FIG. 5, the apparatus for attaching and detaching a cap is detached from the cap 10. In detail, after the cap 10 is mounted onto the center hole of the optical disc substrate 11, the permanent magnetic member 21 inside the guide member 20 slides upward to the position where the magnetic bonding is removed, so that the cap 10 is detached. In FIG. 6, the guide member 25 is separated from the upper surface of the cap 10. As a result, a pre-operation for spin coating is completed.

An apparatus for optical disc spin coating according to an embodiment of the present invention includes: a rotary turntable on which an optical disc can be mounted; a cap for covering a center hole of the optical disc; and an apparatus for attaching and detaching a cap for optical disc spin-coating.

The turntable can be made of any material that is commonly used in the art. The cap may be formed of a magnetic material, such as metal or the like, so that the cap can be attached to and detached from the optical disc by a permanent magnet.

After the cap is mounted onto the center hole of the optical disc, the cap and the optical disc are fixed by providing vacuum pressure therebetween. In this case, the vacuum pressure must be removed before the cap is detached.

In a method of coating an optical disc according to an embodiment of the present invention, the center hole of the optical disc is covered by the cap, a photocurable resin is discharged on the central upper surface of the cap, and then the discharged photocurable resin is spread on the entire surface of the optical disc by rotating the optical disc, thus forming a protective layer. In this method, the cap is attached or detached using the apparatus for attaching and detaching a cap for optical disc sping-coating according to the present invention.

The apparatus for optical disc spin coating and method of manufacturing an optical disc according to the present invention can be used to manufacture a write once read many (WORM)-type optical disc and an erasable-type optical disc that includes a recording layer, a read only memory (ROM) optical disc, and any optical disc including a light-transmitting layer that is formed by spin coating. The apparatus can also be used to form, in addition to the light-transmitting layer, a protecting layer, a middle layer, a lacquer layer, or the like, in order to improve the mechanical characteristics of the optical disc.

FIG. 7 illustrates a method of spin coating a photocurable resin 40 after the cap 10 is attached according to an embodiment of the present invention. Referring to FIG. 7, the photocurable resin 40 is discharged to the center of the cap 10 via a nozzle 30, and then spin coating is performed by rotating the turntable 20 at a rotary speed of about 20 to 100 rpm, which is relatively slow. When the discharging of the photocurable resin 40 is completed, the rotation speed is increased to produce a uniform light transmitting layer. The rotary speed is closely related to the thickness of the light transmitting layer to be formed. That is, as the rotary speed increases, the thickness of the light transmitting layer decreases. Any photocurable resin that is commonly used in the art can be used in the present invention. For example, an acylate resin is mainly used.

After the photocurable resin 40 is spin coated, the cap 10 must be detached. The removal of the cap 10 can be performed before or after the photocurable resin has hardened. However, when the cap 10 is removed after the photocurable resin has hardened, a boundary surface between the cap 10 and the light-transmitting layer can be damaged so that a burr can be formed. Accordingly, preferably, the cap 10 is removed before the photocurable resin has hardened. The apparatus for attaching and detaching a cap for optical disc spin-coating is placed on the upper portion of the cap 10 in order to detach the cap 10, while the turntable 20 rotates. However, it is preferable when the turntable rotates more slowly, or stops.

The present invention will be described in further detail with reference to the following examples. However, the following examples are for illustrative purposes only and are not intended to limit the scope of the invention.

## Mode for Invention

Example 1

An optical disc was manufactured by first forming a four-layer structure of Ag alloy/ZnS-SiO$_2$/Sb-GeTe/ZnS-SiO$_2$ by sputtering on a projection molded polycarbonate (PC) optical disc substrate with a thickness of 1.1 mm, an outer diameter of 120 mm, and an inner diameter (the diameter of the center hole) of 15 mm. Then, the optical disc was placed on a turntable and then a cap was mounted onto the center hole of the optical disc using an apparatus for attaching and detaching a cap for optical disc spin-coating. Thereafter, a guide member was fixed, and a permanent magnet member inside the guide member was lifted, so that the magnetic bonding was removed and the cap was completely installed. Then, after fixing the cap and the optical disc via vacuum pressure, an ultra violet curable resin containing EB 8402 (obtained from SK UCB Co., Ltd), Irgacure 184 (obtained from Ciba SC Co., Ltd.), Irgacure 651 (obtained from Ciba SC Co., Ltd), and methylethylketone was spin coated to form a light-transmitting layer with a thickness of 100 □. Then, the cap was detached from the optical disc by removing the vacuum pressure for fixing the optical disc and the cap. Then, the guide member of the apparatus for attaching and detaching a cap for optical disc spin-coating was placed on the upper surface of the cap, the permanent magnet member inside the guide member was descended to magnetically bond to the cap, and the apparatus for attaching and detaching was lifted, thus separating the cap from the optical disc. Finally, UV light was radiated to the resultant product to harden the photocurable resin. When the spin coating of the resulting optical disc was repeated tens of times, the apparatus for attaching and detaching a cap for optical disc spin coating according to the present embodiment was able to be separated from the cap.

Comparative Example 1

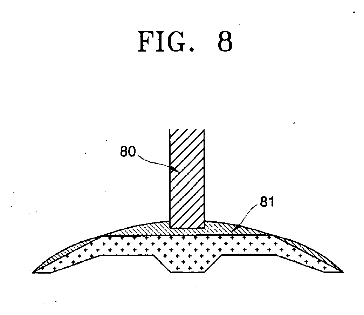

An optical disc was manufactured in the same manner as in Example 1 except that a conventional apparatus for attaching and detaching a cap using an electromagnet was used instead of the apparatus for attaching and detaching a cap for optical disc spin-coating according to an embodiment of the present invention. FIG. 8 illustrates the conventional apparatus for attaching and detaching made of an electromagnet and the cap which are attached to each other after the spin coating. In this case, however, when the resin-coated cap was placed on another optical disc to be coated, the cap was persistently attached to the electromagnet due to the viscosity of the resin even when the power source of the electromagnet was turned off.

While the present invention has been particularly shown and described with reference to exemplary embodiments thereof, it will be understood by those of ordinary skill in the art that various changes in form and details may be made therein without departing from the scope of the present invention as defined by the following claims.

## Industrial Applicability

By using the apparatus for attaching and detaching a cap for optical disc spin-coating, the cap can be easily attached and detached even when the viscosity of the photocurable resin is high. In addition the use of the apparatus for optical disc spin-coating and the method of manufacturing an optical disc according to the present invention results in high manufacturing efficiency.

## Claims

1. An apparatus for attaching and detaching a cap (10) for optical disc spin coating which is attached to and is detached from the center hole of the optical disc, the apparatus comprising:

    a guide member (25) that can approach and recede from an upper portion of the cap; (2 5) and a permanent magnet member (22) that is coupled to the guide member such that the permanent magnet member can slide from a position where the guide member can be magnetically bonded to the cap to a position where the guide member can be magnetically separated from the cap.

2. The apparatus of claim 1, wherein the guide member is conduit-shaped and forms a space for moving where the permanent magnet member slides.

3. The apparatus of claim 2, wherein the permanent magnet member comprises a piston head - shaped permanent magnet, and a shaft-shaped holding member that has an end bonded to the permanent magnet and the other end bonded to the outside the guide member.

4. An apparatus for optical disc spin-coating, comprising
    a rotary turntable on which an optical disc is placed;
    a cap for covering a center hole of the optical disc; and
    the apparatus for attaching and detaching the cap for optical disc spin-coating of any one of claims 1 through 3.

5. A method of manufacturing an optical disc comprising: covering a center hole of the optical disc using a cap; discharging a photocurable resin onto a center of the cap; and spreading the photocurable resin on the entire surface of the optical disc by rotating the optical disc to form a protective layer, the method comprising attaching or detaching the cap using the apparatus of any one of claims 1 through 3.

## Patentansprüche

1. Vorrichtung zum Anbringen und Abnehmen eines Deckels (10) zur Spinbeschichtung einer optischen Disc, der angebracht an und abgenommen von der mittigen Öffnung der optischen Disc ist, wobei die Vorrichtung umfasst:

    ein Führungselement (25), das sich von einem oberen Abschnitt des Deckels annähern und zurückweichen kann, und
    ein Permanentmagnetelement (22), das an das Führungselement derart gekoppelt ist, dass sich das Permanentmagnetelement von einer Position, in der das Führungselement magnetisch an den Deckel gebunden sein kann, zu einer Position, in der das Führungselement magnetisch von dem Deckel getrennt sein kann, verschieben kann.

2. Vorrichtung nach Anspruch 1, wobei das Führungselement eine Leitungsform aufweist und einen Raum zum Bewegen bildet, wo sich das Permanentmagnetelement verschiebt.

3. Vorrichtung nach Anspruch 2, wobei das Permanentmagnetelement einen kolbenkopfförmigen Permanentmagneten und ein schaftförmiges Halteelement umfasst, dessen eines Ende an den Permanentmagneten gebunden ist und dessen anderes Ende an die Außenseite des Führungselements gebunden ist.

4. Vorrichtung zum Spinbeschichten einer optischen Disc, umfassend
    einen drehbaren Drehtisch, auf dem eine optische Disc platziert wird,
    einen Deckel zum Bedecken einer mittigen Öffnung der optischen Disc und
    die Vorrichtung zum Anbringen und Abnehmen des Deckels zum Spinbeschichten einer optischen Disc nach einem der Ansprüche 1 bis 3.

5. Verfahren zum Herstellen einer optischen Disc, umfassend:

    Bedecken einer mittigen Öffnung der optischen Disc unter Verwendung eines Deckels,
    Ausgeben eines Photoharzes auf eine Mitte des Deckels und
    Verteilen des Photoharzes auf der gesamten Oberfläche der optischen Disc durch Drehen der optischen Disc, um eine Schutzschicht zu bilden, wobei das Verfahren
ein Anbringen oder Abnehmen des Deckels unter Verwendung der Vorrichtung nach einem der Ansprüche 1 bis 3 umfasst.

**Revendications**

1. Appareil pour attacher et détacher un chapeau (10) en vue d'un revêtement d'un disque optique par centrifugation, chapeau qui est attaché à, et détaché de l'alésage central du disque optique, l'appareil comprenant :

   un organe de guidage (25) qui peut s'approcher et s'écarter d'une portion supérieure du chapeau ; et
   un organe à aimant permanent (22) qui est couplé à l'organe de guidage de telle sorte que l'organe à aimant permanent peut glisser d'une position dans laquelle l'organe de guidage peut être relié magnétiquement au chapeau, à une position dans laquelle l'organe de guidage peut être magnétiquement séparé du chapeau.

2. Appareil selon la revendication 1, dans lequel l'organe de guidage est en forme de conduit, et forme un espace de mouvement dans lequel glisse l'organe à aimant permanent.

3. Appareil selon la revendication 2, dans lequel l'organe à aimant permanent comprend un aimant permanent en forme de tête de piston, et un organe de retenue en forme d'arbre qui présente une extrémité liée à l'aimant permanent et l'autre extrémité liée à l'extérieur de l'organe de guidage.

4. Appareil de revêtement de disque optique par centrifugation, comprenant
   un plateau tournant sur lequel est placé un disque optique,
   un chapeau pour couvrir l'alésage central du disque optique, et
   l'appareil pour attacher et détacher le chapeau en vue d'un revêtement par centrifugation d'un disque optique selon l'une quelconque des revendications 1 à 3.

5. Procédé de fabrication d'un disque optique comprenant les étapes consistant à couvrir l'alésage central du disque optique en utilisant un chapeau ; décharger une résine photodurcissable sur un centre du chapeau ; et étendre la résine photodurcissable sur l'entière surface du disque optique en faisant tourner le disque optique, pour former une couche protectrice, le procédé comprenant les étapes consistant à attacher et à détacher le chapeau en utilisant l'appareil selon l'une quelconque des revendications 1 à 3.

# FIG. 1

DISTANCE BETWEEN THE CENTER OF
A SUBSTRATE AND POSITION AT WHICH
PHOTOCUNABLE RESIN IS DISCHARGED (nm)

# FIG. 2

## FIG. 3A

25a

## FIG. 3B

25b

## FIG. 3C

25c

# FIG. 4

# FIG. 5

# FIG. 6

# FIG. 7

FIG. 8

**EP 1 756 819 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 10289489 A
- US 6689415 B
- JP 11213459 A